# DEMANDE DE BREVET EUROPEEN

(11) **EP 1 130 221 A1**
(43) Date de publication de la demande: **05.09.2001**
(21) Numéro de dépôt: 01870023.7
(22) Date de dépôt: 09.02.2001
(51) Int. Cl.: F01D 25/20, F01D 15/08

(54) **Procédé et dispositif de lubrification pour moteur aeronautique**

(30) Priorité: 14.02.2000 US 182173 P; 31.05.2000 EP 00870118
(71) Demandeur: Techspace Aero S.A., 4041 Herstal (BE)
(72) Inventeur: Cornet, Albert, 4800 Verviers (BE)
(74) Mandataire: Van Malderen, Joelle

(57) **Abrégé**

La présente invention se rapporte à un procédé de lubrification d'un moteur aéronautique, et de préférence d'un turboréacteur comprenant au moins un arbre (2), dans lequel on assure à l'aide d'une pompe (1,15,17) la mise en pression d'huile prélevée dans un réservoir (3), la distribution d'huile via un circuit aval (5) vers des organes (6) dudit moteur ainsi que le retour de l'huile via un circuit amont (7) vers le réservoir (3), la vitesse de rotation de ladite pompe (1,15,17) étant variable et réglable, caractérisé en ce que l'on contrôle et régule cette vitesse de rotation de ladite pompe (1,15,17) de préférence par une loi prédéterminée en vue de s'adapter aux besoins réels en lubrification dudit moteur.

## Description

### Objet de l'invention

La présente invention a pour objet un procédé et un dispositif de lubrification pour moteur aéronautique.

### Etat de la technique

Il est connu que les moteurs aéronautiques sont lubrifiés par un ensemble de pompes assurant d'une part la mise en pression de l'huile prélevée dans le réservoir et fournie ensuite vers les organes moteurs à lubrifier, et d'autre part la récupération de l'huile récoltée aux points bas du moteur et renvoyée au réservoir. Ces pompes sont toutes soit entraînées par un même arbre en un « groupe de pompes », soit réparties individuellement dans le moteur.

Pour diverses raisons, ces pompes sont généralement de type volumétrique. Les types simples, à cylindrée fixe, tels que les pompes à engrenages, Gérotors® , à palettes, sont préférés pour des raisons de simplicité, fiabilité et légèreté.

Comme d'autres accessoires du moteur, ces pompes sont entraînées par l'arbre du corps haute pression du moteur au travers d'une chaîne cinématique plus ou moins complexe. La vitesse des pompes est donc directement proportionnelle à la vitesse de rotation de cet arbre.

Puisque la vitesse d'entraînement des pompes est donc à tout instant directement proportionnelle à la vitesse de rotation du moteur, et comme la cylindrée des pompes est fixe, le débit d'huile fourni n'est pas réglable en fonctionnement et n'est donc pas ajusté aux besoins réels de lubrification. Il ne dépend que de la performance de la pompe à la vitesse imposée par le moteur, dans les conditions imposées par l'environnement direct et les circuits amont et aval.

Le débit d'huile, et donc la pression, augmentent avec la vitesse de rotation du moteur. Si la pression devient trop grande, des systèmes de sécurité, par exemple des clapets de surpression, interviennent pour laisser s'échapper l'huile excédentaire.

Certains constructeurs ajoutent des systèmes de régulation ou de limitation de pression dans le circuit aval. Ceux-ci cependant, de type passif, ne peuvent que stabiliser ou écrêter la pression de l'huile dans certains régimes.

Le débit de lubrification du moteur est donc peu ou pas contrôlé et essentiellement dépendant du régime de fonctionnement du moteur. Or, le besoin en huile du moteur est lié à plusieurs autres paramètres, hormis la vitesse de rotation de l'arbre. Ces paramètres sont notamment la pression et la température externes, qui dépendent elles-mêmes de l'altitude, la charge du moteur et les variations de régime, qui peuvent conduire à des transitoires thermiques importants.

Comme le besoin du moteur en huile durant le fonctionnement varie selon une loi différente de celle commandant l'évolution du débit effectif des pompes, on est amené à dimensionner celles-ci en fonction du cas de fonctionnement le plus défavorable. Il en résulte un surdimensionnement souvent important dans les autres cas de fonctionnement. Les conséquences en sont le surdimensionnement du circuit, de la pompe et de ses organes d'entraînement, une consommation énergétique inutile, de même que la présence dans le moteur d'une quantité d'huile excessive, néfaste au rendement des organes internes.

L'usage dans le circuit aval de systèmes de contrôle de débit n'éliminerait pas la dépense énergétique et le surdimensionnement des pompes, mais augmenterait le poids du système tout en dégradant sa fiabilité. De même, les pompes à cylindrée variable, trop lourdes, trop peu fiables et d'un rendement médiocre n'apportent pas une solution efficace.

Le brevet US-A-5 152 141 propose un procédé pour actionner et piloter électriquement des accessoires associés à un moteur à turbine à gaz, et en particulier la pompe à huile du moteur. On alimente électriquement un ou plusieurs contrôleurs électroniques qui gèrent à la fois un démarreur-générateur du moteur à turbine et une série de moteurs auxiliaires électriques couplés typiquement à une pompe à huile, à un séparateur de particules entrantes, à un système de refroidissement à air, etc. Selon cette invention, après le démarrage du moteur principal, le contrôleur électronique est utilisé pour augmenter la vitesse des moteurs électriques auxiliaires jusqu'à ce que ceux-ci soient synchrones avec le démarreur-générateur, dont la vitesse de rotation est constamment proportionnelle à celle du moteur à turbine. Ensuite, le fonctionnement se poursuit en maintenant un couplage électrique entre le démarreur-générateur et chacun de ces moteurs. En particulier la vitesse de la pompe à huile varie entre le démarrage et le régime maximal du moteur suivant une courbe d'accélération prédéterminée. L'accélération imprimée à cette pompe est notamment choisie pour permettre la lubrification optimale des pièces mobiles du moteur à turbine.

Dans le brevet US-A- 5 285 626, on divulgue un dispositif d'actionnement pneumatique de turbines auxiliaires, où le gaz sous pression est prélevé sur le moteur à turbine à gaz. Un contrôleur est associé à chaque turbine auxiliaire de manière à pouvoir en contrôler la vitesse indépendamment. Des unités auxiliaires, dont un dispositif de lubrification, sont connectées aux turbines auxiliaires par l'intermédiaire de transmissions.

Le brevet US-A-4 156 407 se rapporte à un moteur à combustion interne, par exemple un moteur à explosion. Habituellement les pompes à huile et à eau sont actionnées par couplage mécanique par poulies et courroie au vilebrequin. Dans le cas présent, on propose d'installer une pompe dans le circuit d'huile, qui peut être commandée indépendamment de la vitesse de rotation du moteur, grâce à un moteur électrique propre. La vitesse de la pompe est variable et peut être modifiée en fonction des conditions de fonctionnement, manuellement ou automatiquement au moyen d'éléments de contrôle spécifiques.

### Buts de l'invention

La présente invention a pour but de proposer un procédé et un dispositif de lubrification pour moteur aéronautique qui ne présentent pas les inconvénients de l'état de la technique.

En particulier, l'invention a pour but de proposer un procédé et un dispositif de lubrification permettant de satisfaire le mieux possible à tout moment le besoin réel en huile du moteur.

Un but complémentaire de l'invention est de fournir une solution permettant un allégement considérable de la chaîne cinématique par la suppression des organes d'entraînement de la pompe, la simplification du circuit de lubrification et des accessoires associés, par rapport à l'état de la technique.

Un but complémentaire de l'invention est de fournir une solution permettant d'utiliser une pompe hydrauliquement simple, légère et fiable.

Enfin, l'invention a pour but de proposer une solution moins coûteuse que celle de l'état de la technique.

### Principaux éléments caractéristiques de l'invention

La présente invention se rapporte à un procédé de lubrification d'un moteur aéronautique, et de préférence un turboréacteur, comportant au moins un arbre, dans lequel on assure à l'aide d'une pompe la mise en pression d'huile prélevée dans un réservoir, la distribution de l'huile via un circuit aval vers des organes dudit moteur ainsi que le retour de l'huile via un circuit de récupération vers le réservoir.

De manière particulièrement avantageuse, la vitesse de rotation de ladite pompe est variable et réglable et de préférence indépendante de la vitesse de rotation de l'arbre du moteur.

Avantageusement, le procédé consiste à contrôler et réguler la vitesse de rotation de ladite pompe par un asservissement donné de préférence sous la forme d'une loi prédéterminée en vue de s'adapter aux besoins réels de lubrification dudit moteur.

De préférence, la régulation est basée sur des lois préétablies de besoin en huile en fonction des caractéristiques de vol, de fonctionnement du moteur aéronautique et/ou des caractéristiques hydrauliques de la pompe.

Selon une première forme d'exécution, ladite régulation de la vitesse de la pompe s'effectue suivant une logique en boucle ouverte.

Selon une autre forme d'exécution, ladite régulation de la vitesse de la pompe s'effectue suivant une logique en boucle fermée.

Selon une autre forme d'exécution, ladite régulation de la vitesse de la pompe s'effectue suivant une logique floue.

La régulation de la vitesse en boucle ouverte est en outre avantageusement basée sur un ou plusieurs paramètres moteur tels que la pression, la température, la vitesse d'arbre et la charge mécanique.

La régulation de la vitesse en boucle fermée est en outre avantageusement basée sur une température, de préférence d'huile, mesurée en au moins un point du moteur.

La boucle fermée peut être réalisée en proportionnelle/dérivée ou en PID.

La présente invention se rapporte également à un dispositif de lubrification comprenant au moins une pompe, pour un moteur aéronautique, de préférence un turboréacteur, comportant au moins un arbre, ledit dispositif assurant la mise en pression d'huile prélevée dans un réservoir, la distribution de l'huile, via un circuit aval, vers des organes dudit moteur ainsi que le retour de l'huile, via un circuit de récupération, vers le réservoir, après récupération de ladite huile à des points bas dudit moteur, caractérisé en ce que la vitesse de rotation de ladite pompe est variable et réglable, indépendamment de la vitesse de rotation de l'arbre moteur et en ce qu'il comprend des moyens de contrôle et de régulation de la vitesse de rotation de la pompe, ladite vitesse étant asservie de préférence par une loi prédéterminée aux caractéristiques de vol, aux caractéristiques de fonctionnement dudit moteur aéronautique et aux caractéristiques hydrauliques de la pompe.

Avantageusement, ladite pompe fait partie d'un groupe motopompe à vitesse variable, de préférence placé directement sur le réservoir d'huile.

De préférence, la pompe du dispositif selon l'invention est actionnée par une source d'énergie qui peut être par exemple constituée d'une génératrice, de préférence accouplée au moteur aéronautique ou encore d'un système hydraulique ou pneumatique.

De manière particulièrement avantageuse, le dispositif comprend des moyens de régulation de la vitesse de la pompe agissant suivant une logique en boucle ouverte, en boucle fermée ou basés sur la logique floue.

De préférence, la régulation est en outre basée sur des lois préétablies de besoin en huile en fonction des caractéristiques de vol, de fonctionnement du moteur aéronautique et des caractéristiques hydrauliques de la pompe.

La régulation de la vitesse en boucle ouverte est en outre avantageusement basée sur un ou plusieurs paramètres moteur tels que la pression, la température, la vitesse d'arbre et la charge mécanique.

La régulation de la vitesse en boucle fermée est en outre avantageusement basée sur une température, de préférence d'huile, mesurée en au moins un point du moteur.

La boucle fermée peut être réalisée en proportionnelle/dérivée ou en PID.

En outre, selon l'invention, lesdites pompes étant utilisées individuellement ou en groupe, le dispositif de lubrification peut comporter des moyens affectant chaque pompe ou groupe de pompes à au moins une tâche spécifique de lubrification, chaque pompe ou groupe de pompes étant régulé en fonction de ladite tâche spécifique, indépendamment les uns des autres.

### Brève description des dessins

La figure 1 représente schématiquement un dispositif de lubrification pour moteur aéronautique selon l'état de la technique.

La figure 2 représente schématiquement un dispositif de lubrification pour moteur aéronautique selon une première forme d'exécution de la présente invention.

La figure 3 représente schématiquement un dispositif de lubrification pour moteur aéronautique selon une deuxième forme d'exécution de la présente invention.

La figure 4 représente schématiquement un dispositif de lubrification pour moteur aéronautique selon une troisième forme d'exécution de la présente invention.

### Description détaillée de l'invention et de plusieurs formes d'exécution préférées

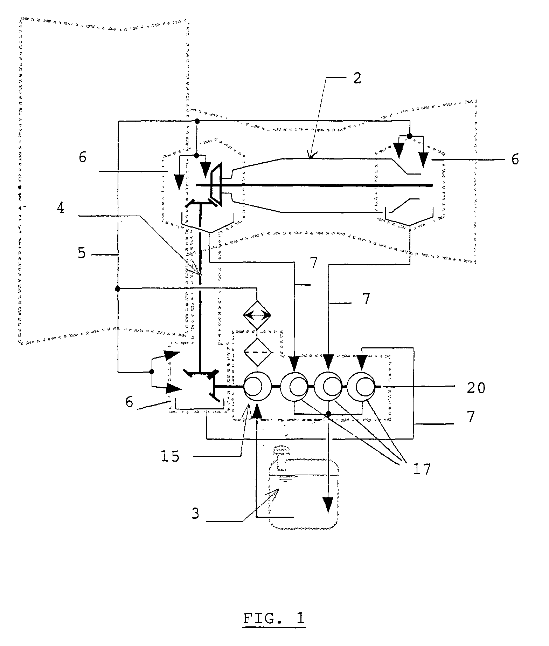

Selon l'état de la technique représenté schématiquement à la figure 1, un groupe de pompes de lubrification 15,17 est disposé sur un arbre unique 20. Celui-ci est entraîné par une chaîne cinématique 4, laquelle est à son tour entraînée par l'arbre haute pression 2 du moteur.

L'huile est d'une part prélevée dans le réservoir 3 et fournie par une (ou des) pompe(s) 15 aux différents organes à lubrifier 6, via un circuit aval 5, et d'autre part, récupérée aux points bas du moteur et renvoyée par une (ou des) pompe(s) 17 au réservoir 3, via un circuit de récupération 7.

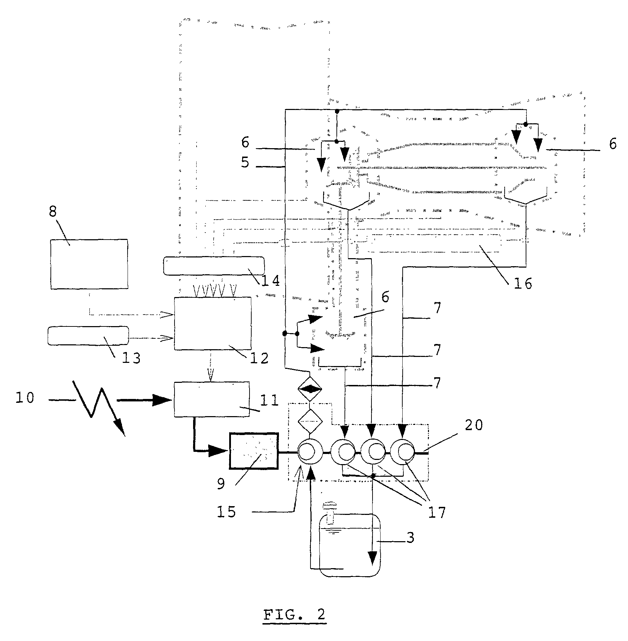

La figure 2 est un schéma de principe de contrôle de pompes de lubrification à entraînement indépendant, selon une forme d'exécution préférée de l'invention, où toutes les pompes sont regroupées sur un arbre unique 20.

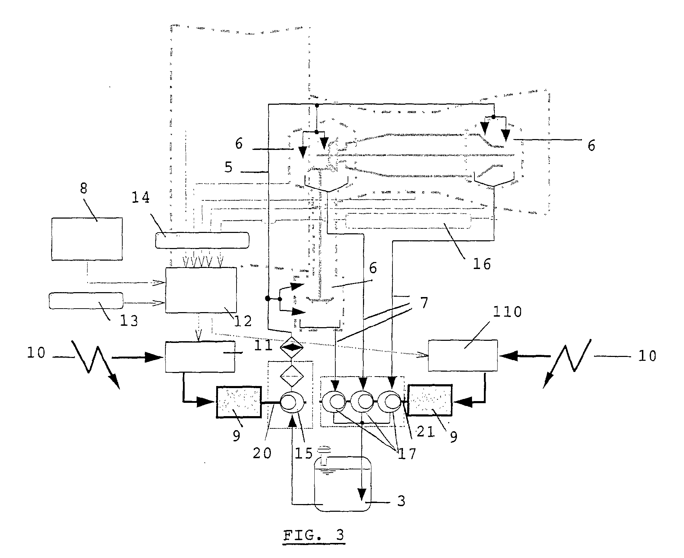

Selon une autre forme d'exécution particulière de l'invention représentée à la figure 3, le contrôle de la vitesse 11 de la pompe d'alimentation 15 est effectué séparément du contrôle de la vitesse commune 110 de toutes les pompes de récupération 17, les deux types de pompes se trouvant sur des arbres différents 20,21.

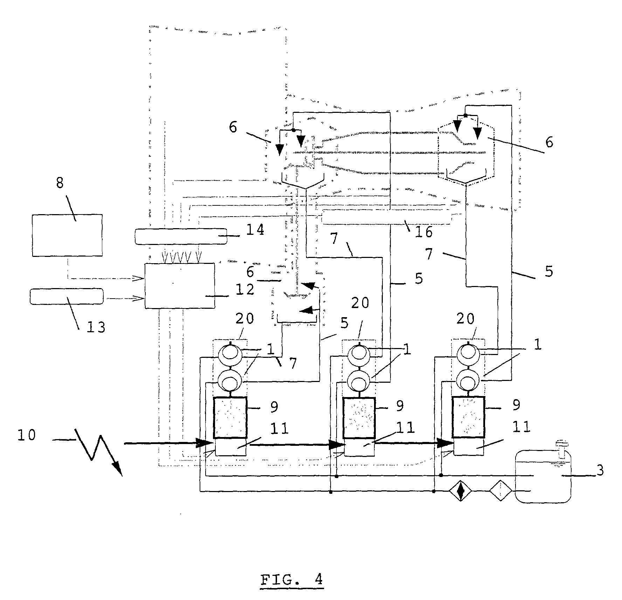

Enfin, la figure 4 présente une dernière forme d'exécution préférée de l'invention, dans laquelle on effectue le contrôle 11 de cellules indépendantes 1,9 d'alimentation et récupération pour chaque enceinte moteur 6.

De manière générale, on peut appliquer l'invention à un groupe de pompes « disposées » sur un même arbre, ou encore individuellement à plusieurs pompes ou sous-groupes de pompes, entraînées individuellement par un moteur.

Le principe à la base de l'invention est de disposer, par des moyens adéquats, à un endroit quelconque sur le moteur, par exemple directement sur le réservoir d'huile, un groupe motopompe 9,15,17 (ou 9,1) à vitesse variable. Ce groupe utilise de préférence l'énergie électrique fournie soit par une génératrice 10 accouplée au moteur de l'avion, soit toute autre source d'énergie électrique disponible sur l'avion (hydraulique, pneumatique, etc.).

La vitesse du (ou des) groupe(s) motopompe(s) est asservie selon une logique adéquate 11, d'un des types suivants :
- régulation en boucle totalement ouverte, basée sur des lois préétablies de besoin en huile moteur en fonction des conditions de vol et de fonctionnement. Les caractéristiques hydrauliques connues de la pompe sont intégrées. L'entrée est la configuration de vol et le système en déduit une vitesse optimale de rotation de la pompe. La consigne 12 de départ n'est pas réadaptée en fonction du résultat. Des effets de retard ou d'anticipation peuvent être intégrés pour gérer les transitoires thermiques ;
- régulation en boucle ouverte à partir de mesures de paramètres 14 recueillis sur le moteur et significatifs de la charge et des puissances dissipées par les organes à lubrifier (pression et température du moteur 16, vitesse d'arbre 13, éventuellement charge du moteur, etc.). La régulation 11,12 calcule le besoin en huile à partir de ces données et intègre la caractéristique de la pompe. Comme précédemment, l'asservissement peut intégrer des effets de retard ou d'anticipation ;
- régulation en boucle fermée sur la température de l'huile sortant du moteur, ou de celle d'organes à lubrifier, ou encore d'autres points du moteur. Cette boucle peut être réalisée en proportionnelle/dérivée, PID (proportionnelle intégrale dérivée) ou autre. Cette stratégie a l'avantage de compenser automatiquement jusqu'à un certain point l'usure ou une dégradation accidentelle de la pompe ;
- régulation en logique floue ou auto-adaptative, conçue sur base de l'expérience acquise.

Les calculs de la vitesse de rotation de la pompe à réaliser et des fonctions d'asservissement 11,12 peuvent être entièrement exécutés par le calculateur central 8 du moteur (FADEC) ou par un calculateur propre à la pompe ou au dispositif de lubrification, ou encore répartis entre ces deux calculateurs.

L'invention présente un certain nombre d'avantages sur l'état de la technique. Le surcroît de masse engendré par le moteur à vitesse variable, de préférence mais pas nécessairement électrique, est largement compensé par l'allègement de la chaîne cinématique d'entraînement selon l'état de la technique, ainsi que l'allégement de tout le circuit et accessoires de lubrification rendu possible.

On peut également conserver une pompe hydrauliquement simple, légère et fiable. Le moteur d'entraînement de la pompe et son dispositif de contrôle peuvent donc être réalisés avec une masse inférieure et une fiabilité au moins égale à celles de la chaîne cinématique qu'ils remplacent.

De plus, la tendance actuelle est à l'accroissement des besoins en énergie électrique des moteurs et des avions futurs ainsi qu'à l'extension du contrôle informatique du moteur. On constate dès lors que l'essentiel des moyens matériels nécessaires à la fourniture de la puissance et des consignes de vitesse à la pompe sont déjà présents - ou le seront rapidement - sur les moteurs. Le surcroît en masse et en coût de la solution proposée est donc marginal pour ces équipements, alors qu'un gain important en masse et coût est par contre réalisé par la suppression d'organes mécaniques d'entraînement, l'allégement de la pompe elle-même et du circuit associé.

Le dispositif selon l'invention permet en outre, de par sa plus grande souplesse et sa consommation moindre en huile, d'améliorer le rendement total du moteur.

Enfin, l'invention permet des stratégies d'adaptation plus souples aux fonctionnements dégradés que dans les solutions de l'état de la technique, et donc une meilleure fiabilité.

## Revendications

1. Procédé de lubrification d'un moteur aéronautique, et de préférence d'un turboréacteur comprenant au moins un arbre (2), dans lequel on assure à l'aide d'une pompe (1,15,17) la mise en pression d'huile prélevée dans un réservoir (3), la distribution d'huile via un circuit aval (5) vers des organes (6) dudit moteur ainsi que le retour de l'huile via un circuit amont (7) vers le réservoir (3), la vitesse de rotation de ladite pompe (1,15,17) étant variable et réglable, **caractérisé en ce que** l'on contrôle et régule cette vitesse de rotation de ladite pompe (1,15,17) de préférence par une loi prédéterminée en vue de s'adapter aux besoins réels en lubrification dudit moteur.

2. Procédé de lubrification selon la revendication 1, **caractérisé en ce que** l'on régule ladite vitesse de rotation de ladite pompe (1,15,17) par un asservissement en fonction des caractéristiques de vol, des caractéristiques de fonctionnement du moteur et des caractéristiques hydrauliques de ladite pompe (1,15,17).

3. Procédé de lubrification selon la revendication 1 ou 2, **caractérisé en ce que** la régulation de la vitesse de ladite pompe (1,15,17) obéit à une logique en boucle ouverte.

4. Procédé de lubrification selon la revendication 3, **caractérisé en ce que** la régulation est basée sur la mesure d'un ou plusieurs paramètres moteur (13,14,16) tels que la pression, la température, la vitesse d'arbre (2) et la charge mécanique du moteur.

5. Procédé de lubrification selon la revendication 1 ou 2, **caractérisé en ce que** la régulation de la vitesse de ladite pompe (1,15,17) obéit à une logique en boucle fermée.

6. Procédé de lubrification selon la revendication 5, **caractérisé en ce que** la régulation en boucle fermée est effectuée sur base de la température, de préférence d'huile, mesurée en au moins un point du moteur.

7. Procédé de lubrification selon la revendication 6, **caractérisé en ce que** ladite boucle fermée est réalisée en proportionnelle/dérivée (PD) ou proportionnelle/intégrale/dérivée (PID).

8. Procédé de lubrification selon la revendication 1 ou 2, **caractérisé en ce que** la régulation de la vitesse de ladite pompe (1,15,17) obéit à une logique floue ou auto-adaptative.

9. Dispositif de lubrification, comprenant au moins une pompe (1,15,17), pour un moteur aéronautique, de préférence un turboréacteur, comportant au moins un arbre moteur (2), ledit dispositif assurant la mise en pression d'huile prélevée dans un réservoir (3), la distribution de l'huile, via un circuit aval (5), vers des organes (6) dudit moteur ainsi que le retour de l'huile, via un circuit amont (7), vers le réservoir (3), après récupération de ladite huile à des points bas dudit moteur, la vitesse de rotation de ladite pompe (1,15,17) étant variable et réglable, indépendamment de la vitesse de rotation de l'arbre moteur (2), **caractérisé en ce que** ledit dispositif comporte des moyens de régulation (11,12) de la vitesse de la pompe pour tenir compte des besoins réels en lubrification du moteur.

10. Dispositif selon la revendication 9, **caractérisé en ce que** ladite pompe fait partie d'un groupe motopompe (9,1,15,17) à vitesse variable.

11. Dispositif selon la revendication 10, **caractérisée en ce que** la pompe ou motopompe (9,1,15,17) est actionnable par une source d'énergie constituée d'une génératrice (10), de préférence accouplée au moteur aéronautique.

12. Dispositif selon la revendication 10, **caractérisée en ce que** la pompe ou motopompe (9,1,15,17) est actionnable par une source d'énergie constituée d'un système hydraulique ou pneumatique.

13. Dispositif selon l'une quelconque des revendications 9 à 12, **caractérisé en ce que** lesdits moyens de régulation (11,12) de la vitesse de la pompe ou motopompe (9,1,15,17) obéissent à une logique en boucle ouverte.

14. Dispositif selon l'une quelconque des revendications 9 à 12, **caractérisé en ce que** lesdits moyens de régulation (11,12) de la vitesse de la pompe ou motopompe (9,1,15,17) obéissent à une logique en boucle fermée.

15. Dispositif selon l'une quelconque des revendications 9 à 12, **caractérisé en ce que** lesdits moyens de régulation (11,12) de la vitesse de la pompe ou motopompe (9,1,15,17) obéissent à une logique floue ou auto-adaptative.

16. Dispositif selon l'une quelconque des revendications 9 à 15, **caractérisé en ce que**, lesdites pompes étant utilisées individuellement ou en groupe, il comporte des moyens affectant chaque pompe ou groupe de pompes à au moins une tâche spécifique de lubrification, chaque pompe ou groupe de pompes étant régulé en fonction de ladite tâche spécifique, indépendamment les uns des autres.

17. Dispositif de lubrification pour un moteur aéronautique, de préférence un turboréacteur, comportant au moins un arbre moteur (2) et composé d'une pluralité d'enceintes moteur (6) à lubrifier, ledit dispositif assurant, pour chaque dite enceinte moteur (6), grâce à un groupe motopompe (9,1) comprenant au moins une pompe (1), la mise en pression d'huile prélevée dans un réservoir (3), de préférence commun, la distribution de l'huile, via un circuit aval (5), vers chaque enceinte (6) dudit moteur ainsi que le retour de l'huile, via un circuit amont (7), vers le réservoir (3), après récupération de ladite huile à des points bas de chaque enceinte (6), **caractérisé en ce que** la vitesse de rotation de chaque groupe motopompe (9,1) est variable et réglable, ceci indépendamment les unes des autres.
